# FASCICULE DE BREVET EUROPEEN

(11) **EP 0 676 818 B1**
(45) Date de publication et mention de la délivrance du brevet: **07.07.1999**
(21) Numéro de dépôt: 95102649.1
(22) Date de dépôt: 24.02.1995
(51) Int. Cl.: H01M 2/10

(54) **Protège-batterie**
Batterieschutz
Battery protection

(30) Priorité: 06.04.1994 CH 99494
(43) Date de publication de la demande: 11.10.1995
(73) Titulaire: Longchamp, Daniel, CH-1254 Jussy (CH)
(72) Inventeur: Longchamp, Daniel, CH-1254 Jussy (CH)

(56) Documents cités:
- DE-U- 8 521 248
- US-A- 4 225 655

## Description

La présente invention a pour objet de protéger les batteries contre les variations de température : le froid, la chaleur et l'humidité. L'efficacité et la durée de vie des batteries se trouve augmentée de manière significative, d'où contribution à la protection de l'environnement, économie pour les usagers, et fiabilité accrue des véhicules. Le principe du protège-batterie peut s'appliquer à tous les véhicules à moteur, qu'ils soient terrestres, maritimes ou aériens.

L'entretien périodique des batteries (vérification de la charge au moyen du pèse-acide, recharge éventuelle, appoint d'eau distillée) s'effectue facilement : les batteries restant propres et étant aisément accessibles.

Le brevet US-A-4225655 décrit un dispositif de protection des batteries comprenant un bac, pouvant contenir une batterie, et un couvercle venant s'adapter sur le bac pratiquement jusqu'à sa base. Une ouverture pratiquée dans la partie supérieure du bac, ainsi qu'un couloir externe intégré dans le couvercle, autorisent le passage des cables de la batterie. L'air contenu dans le couloir empêche l'eau de remonter jusqu'à la batterie. D'une conception différente, ce dispositif de protection implique prioritairement une notion d'étanchéité, et est destiné essentiellement au domaine maritime.

Le brevet DE-32 32 487 décrit un dispositif de protection des batteries comprenant un bac et un couvercle isolés, mais d'une conception différente, notamment au niveau du couvercle, où de simples trous autorisent le passage des cables et la ventilation des éléments de la batterie. En outre, la fixation du couvercle au bac présente une solution différente. Au niveau du bac, la couche isolante est renforcée par la présence d'une zone d'air faisant également office d'isolant.

Le dispositif de protection des batteries selon les revendications 2 et 3, outre son efficacité maximale, exerce une fonction de fixation, et est destiné à être intégré dans des études de nouveaux modèles. Le dispositif selon la revendication 2, exige l'emploi de batteries à parois lisses. Le dispositif selon la revendication 3 autorise l'emploi de tous les types de batteries. le bac en matière isolante pouvant s'adapter facilement.

Le dispositif de protection des batteries selon les revendications 4 et 5 s'adapte, dans la majorité des cas, aux véhicules ayant un système de fixation traditionnel. Le dispositif selon la revendication 4 exige l'emploi de batteries à parois lisses, alors que le dispositif selon la revendication 5 autorise l'emploi de tous les types de batteries.

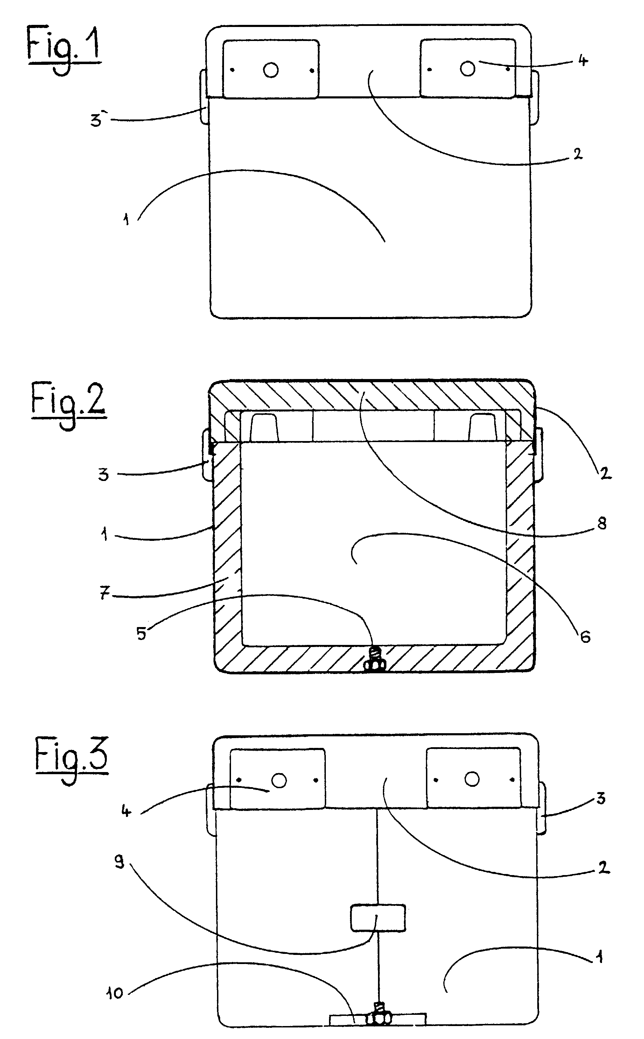

L'invention est illustrée par les figures 1 à 3. La figure 1 est une représentation générale du protège-batterie.
On distingue le bac de maintien (1), le couvercle (2), les attaches (3) fixant le couvercle au bac de maintien, et les deux bouchons (4) autorisant la ventilation des éléments de la batterie, ainsi que le passage des cables. Ces bouchons rectangulaires en matière thermoplastique (polyéthylène à haute densité (PEhd), par exemple) viennent s'emboîter dans le couvercle.
Deux trous, placés sur les côtés des bouchons, et venant s'accrocher aux tétons correspondants dudit couvercle, renforcent la cohésion de l'ensemble.

La figure 2 est une coupe du protège-batterie selon les revendications 1 et 2. On distingue la fixation du bac de maintien (5), la vis peut également être exploitée pour fixer la couche isolante, au moyen d'une vis-écrou. La batterie est déposée au centre du dispositif (6). Un bac en matière isolante de mousse PU entoure la batterie (7). (D'autres isolants tels que la laine de verre ou la laine de roche peuvent être envisagés; cependant leur mise en oeuvre est plus compliquée). Le couvercle (2) contient également une couche de matière isolante (8). La couche isolante du couvercle entrant en contact avec le haut de la batterie, et avec le bac isolant, fait office de butoir.
Pour des raisons de sécurité, le fond du couvercle ainsi que le bord supérieur du bac isolant, sont recouverts d'une matière isolante ininflammable (isolant adhésif universel, par exemple).

La figure 3 est une représentation générale du protège-batterie selon la revendication 5. Comme pour la revendication 4, les parois de maintien (1) et le couvercle (2), n'ayant aucune fonction de fixation, peuvent être en matière thermoplastique (polystyrène choc (SB), par exemple) ou métallique. Les deux parties verticales indépendantes sont maintenues solidaires au moyen d'attaches (9). On distingue le dispositif de fixation à la base de la batterie, et le dégagement pratiqué dans la paroi de maintien (10).

Le dispositif, constitué par un bac de maintien contenant un bac en matière isolante de mousse de polyuréthane et d'un couvercle contenant également une couche de matiére isolante, celui-ci étant fixé au bac de maintien au moyen de deux attaches latérales et étant muni de deux bouchons emboîtables en matière thermoplastique percés de trous autorisant le passage des cables de la batterie, forme un boîtier métallique destiné à être soudé ou fixé au moyen d'une vis à une carrosserie de voiture. Dans un autre mode de réalisation de l'invention, le dispositif peut être scindé en deux parties verticales indépendantes et maintenues solidaires par le boîtier métallique et des attaches disposées sur les grands côtés. Dans un autre mode de réalisation de l'invention encore, le dispositif peut contenir quatre parois solidaires de maintien et d'isolation venant entourer la batterie.

## Revendications

1. Dispositif de protection pour les batteries contre les variations de températuture, constitué d'une part, d'un bac de maintien métallique (1) contenant un bac en matière isolante de mousse en polyuréthane (7), et, d'autre part d'un couvercle métallique (2) contenant également une couche de matière isolante (8),
caractérisé en ce que le couvercle est fixé au bac de maintien au moyen de deux attaches latérales (3), et est muni de deux bouchons (4) en matière thermoplastique autorisant la ventilation des éléments, chacun des deux bouchons étant percé de trous autorisant le passage des cables de la batterie et pouvant s'emboîter dans le couvercle à travers un système de fixation constitué par des tétons présents sur le couvercle et des trous correspondants dans les bouchons.

2. Dispositif selon la revendication 1 caractérisé en ce que le bac isolant et le couvercle isolant sont contenus dans un boîtier métallique qui est destiné à être soudé ou fixé au moyen d'une vis à une carosserie de voiture.

3. Dispositif selon les revendications 1 et 2, caractérisé en ce que le bac isolant (7) est scindé en deux parties verticales indépendantes, et maintenues solidaires par le bac métallique.

4. Dispositif selon la revendication 1 caractérisé par quatre parois solidaires de maintien, contenant quatre parois de matière isolante, également solidaires, et venant entourer la batterie.

5. Dispositif selon la revendication 3, caractérisé en ce que les deux parties verticales indépendantes sont maintenues solidaires conjointement par le couvercle et des attaches (9), disposées sur les grands côtés.

## Patentansprüche

1. Batterieschutzeinrichtung gegen Temperaturveränderungen einerseits aus einem zusammenhaltenden metallischen Behälter (1) bestehend, der einen Isolierstoffbehälter aus Polyurethanschaum (7) enthält, und andererseits aus einem metallischen Deckel (2), der ebenfalls eine Isolierstoffschicht (8) enthält und dadurch gekennzeichnet ist, dass der Deckel an dem zusammenhaltenden Behälter mit zwei seitlichen Halterungen (3) befestigt ist und zwei thermoplastische Stopfen (4) hat, die die Lufterneuerung der Elemente erlaubt, und beide Stopfen sind von Löchern durchbohrt, welche den Durchgang der Batteriekabel ermöglichen, und die sich durch ein Festsetzungsystem, das aus Stifte besteht, die auf dem Deckel sind und entsprechende Löcher in den Stopfen haben, in den Deckel fügen können.

2. Einrichtung nach Anspruch 1, dadurch gekenntzeichnet, dass der isolierende Behälter und der isolierende Deckel in einem metallartigen Gehäuse enthalten sind, welches dazu bestimmt ist, an die Wagenkarosserie geschweisst oder mittels einer Schraube befestigt zu werden.

3. Einrichtung nach den Ansprüchen 1 und 2, dadurch gekenntzeichnet, dass der isolierende Behälter (7) in zwei voneinander unabhängige vertikale Teile getrennt ist, die durch das metallartige Gehäuse solidarisch festgehalten sind.

4. Einrichtung nach Anspruch 1, durch vier solidarische aufrechthaltende Wände gekenntzeichnet, die vier aus Isolierstoff bestehende Wände enthalten, welche ebenfalls solidarisch sind und die Batterie umgeben.

5. Einrichtung nach Anspruch 3, dadurch gekenntzeichnet, dass die zwei unabhängigen vertikalen Teile durch den Deckel und die Halterungen (9) zusammengehalten werden, die auf den grossen Seiten angebracht sind.

## Claims

1. A protection device for batteries against changes in temperature consisting, on the one hand, of a maintenance metallic container (1) which includes a container of insulating material : polyurethanfoam (7), and, on the other hand, of a metallic lid (2), also containing a layer of insulating material (8), distinguished by the fact that the lid is fixed to the maintenance container by two lateral fasteners (3) and provided with two thermoplastic plugs (4) allowing the ventilation of the elements, each of the two plugs being pierced with holes through which the cables of the battery pass, the plugs fitting and being fixed into the lid by means of locking studs present on the lid and with holes corresponding to those in the plugs.

2. A device according to claim 1, distinguished by the fact that the insulating container and the insulating lid are inside a metallic box which is intended to be welded or screwed to the coachwork of a car.

3. A device according to claims 1 and 2, distinguished by the fact that the insulating container (7) is divided into two vertical independant parts, and kept together by the metallic box.

4. A device according to claim 1, distinguished by four maintenance walls connected together, including four walls of insulating material, also connected, and surrounding the battery.

5. A device according to claim 3, distinguished by the fact that the two vertical independant parts are held securely together both by the lid and by the fasteners (9) located on the larger sides.
